# DEMANDE DE BREVET EUROPEEN

(11) **EP 4 386 719 A1**
(43) Date de publication de la demande: **19.06.2024**
(21) Numéro de dépôt: 23214111.9
(22) Date de dépôt: 04.12.2023
(51) Int. Cl.: G08G 5/06, G01S 13/934

(54) **PROCÉDÉ ET SYSTÈME D ASSISTANCE D'UN PILOTE D'UN AÉRONEF LORS D'UN ROULEMENT AU SOL DE L AÉRONEF SUR UNE VOIE DE CIRCULATION D'UN AÉRODROME**

(30) Priorité: 16.12.2022 FR 2213621
(71) Demandeur: Airbus Operations SAS, 31060 Toulouse (FR)
(72) Inventeur: MERE, Jean-Claude, 31060 TOULOUSE (FR); RUSTIN, Mathieu, 31060 TOULOUSE (FR); CLAUDEL, Emilie, 31060 TOULOUSE (FR); SENTISSI, Isabelle, 31060 TOULOUSE (FR); FAURE, Louise, 31060 TOULOUSE (FR); SAMMOUR SAWAYA, Thierry, 31060 Toulouse (FR)
(74) Mandataire: Gevers & Orès

(57) **Abrégé**

- Procédé et système d'assistance d'un pilote d'un aéronef lors d'un roulement au sol de l'aéronef sur une voie de circulation d'un aérodrome.
- Le système (1) comporte une unité pour recevoir au moins une partie d'un trajet (TR) à suivre par l'aéronef (AC) sur l'aérodrome (2), une unité pour surveiller l'aérodrome (2) de manière à pouvoir détecter un élément caractéristique (C1 à C9, B1 à B4) d'une voie de circulation (3, 4, 5, 6) empruntée par l'aéronef (AC), pour déterminer une position relative courante de l'aéronef (AC) par rapport à l'élément caractéristique (C1 à C9, B1 à B4) détecté et pour en déduire au moins une information d'assistance, et une unité pour assister le pilote de l'aéronef (AC) lors du roulement sur l'aérodrome (2) en prenant en compte au moins cette information d'assistance, cette assistance pouvant être mise en oeuvre selon une pluralité de modes d'assistance différents, plus ou moins automatisés.

## Description

### Domaine technique

La présente invention concerne un procédé et un système d'assistance d'un pilote d'un aéronef lors d'un roulement au sol de l'aéronef sur une voie de circulation d'un aérodrome.

### Etat de la technique

Dans le cadre de la présente invention, on entend par voie de circulation de l'aérodrome, une piste (destinée à l'atterrissage et/ou au décollage d'aéronefs) ou une autre voie de roulement de l'aérodrome qui est notamment utilisée par les aéronefs pour effectuer le trajet entre une piste et une zone de stationnement.

La présente invention s'applique plus particulièrement à une phase de roulement au sol (« taxiing » en anglais) sur une telle voie de circulation de l'aérodrome.

Actuellement, aucune fonction certifiée n'assiste complètement le pilote d'un aéronef roulant au sol sur un aérodrome pour l'aider à effectuer le trajet tel que requis.

Aussi, il pourrait être utile de disposer d'une solution permettant d'assister un pilote d'un aéronef lors d'une phase de roulement de type « taxiing ».

### Exposé de l'invention

Un objectif de la présente invention est d'apporter une telle solution. Pour ce faire, la présente invention concerne un procédé d'assistance d'un pilote d'un aéronef lors d'un roulement au sol de l'aéronef sur une voie de circulation d'un aérodrome.

Selon l'invention, ledit procédé comporte au moins les étapes suivantes :
- une étape de surveillance, mise en oeuvre par une unité de surveillance, au moins pour surveiller l'aérodrome de manière à pouvoir détecter au moins un élément caractéristique d'une voie de circulation (empruntée par l'aéronef) de l'aérodrome, pour déterminer une position relative courante de l'aéronef par rapport à l'élément caractéristique détecté, et pour en déduire au moins une information dite d'assistance ; et
- une étape d'assistance, mise en oeuvre par au moins une unité d'assistance, au moins pour assister le pilote de l'aéronef lors du roulement de l'aéronef sur l'aérodrome (afin de faire suivre à l'aéronef un trajet) en prenant en compte au moins ladite information d'assistance.

Le procédé est mis en oeuvre lors d'une phase de roulement au sol de type « taxiing ».

Ainsi, ledit procédé est en mesure, pendant la phase de roulement au sol, d'assister le pilote de l'aéronef pour l'aider à faire suivre à l'aéronef le trajet (cap ou route) qui lui est assigné, cette assistance pouvant être mise en oeuvre selon l'un d'une pluralité de modes d'assistance différents, plus ou moins automatisés, c'est-à-dire nécessitant une intervention plus ou moins importante du pilote de l'aéronef, comme précisé ci-dessous.

Avantageusement, l'étape de surveillance comprend une étape de réception de données comportant au moins une étape d'odométrie au moins pour mettre en oeuvre une odométrie visuelle afin de déterminer au moins la position de l'aéronef (et généralement sa dynamique) permettant notamment d'obtenir ladite position relative courante de l'aéronef.

De préférence, ledit procédé comporte également une étape de réception de trajet, mise en oeuvre par une unité de réception, pour recevoir au moins une partie du trajet à suivre par l'aéronef sur l'aérodrome. Avantageusement, l'étape de réception de trajet comprend la réception de l'une des informations suivantes représentant au moins ladite partie de trajet :
- le cap à suivre par l'aéronef ;
- la route à suivre par l'aéronef.

De façon avantageuse, l'étape de surveillance comprend une étape de réception de données comprenant au moins l'une des étapes suivantes :
- une étape de détection optique comprenant une sous-étape de prise d'images au moins pour prendre des images de l'environnement extérieur de l'aéronef et une sous-étape de traitement d'images au moins pour traiter au moins certaines des images prises à ladite sous-étape de prise d'images de manière à détecter au moins un élément caractéristique relatif à une voie de circulation, représenté dans l'une desdites images traitées ;
- l'tape d'odométrie au moins pour mettre en oeuvre une odométrie visuelle au moins pour déterminer un mouvement (position et vitesse) de l'aéronef ;
- une étape de détection radar au moins pour détecter une limite entre une zone pourvue d'un revêtement pour la circulation sur la voie de circulation et une zone dépourvue d'un revêtement pour la circulation.

En outre, avantageusement, l'étape de surveillance comprend au moins l'une des étapes suivantes :
- une étape de réception de données comprenant la réception d'informations de position d'au moins l'une des sources de données suivantes de l'aéronef : un système de référence inertielle, un système de positionnement par satellites, un odomètre, un tachymètre, un capteur optoélectronique, ces informations de position permettant de déterminer une position absolue de l'aéronef ;
- une étape de traitement de données au moins pour déterminer une position absolue consolidée de l'aéronef, en utilisant des informations de position issues d'une pluralité de sources de données différentes.

De plus, de façon avantageuse, l'étape de surveillance comprend au moins :
- une étape de réception de données comprenant la réception de données relatives à au moins l'un des éléments caractéristiques suivants de la voie de circulation :
   - une ligne centrale de la voie de circulation ;
   - au moins une ligne de bord de la voie de circulation ;
   - au moins une limite entre une zone pourvue d'un revêtement pour la circulation de la voie de circulation et une zone dépourvue d'un revêtement pour la circulation ; et
- une étape de traitement de données au moins pour traiter les données reçues à l'étape de réception de données de manière à déterminer la position relative courante de l'aéronef par rapport à l'élément caractéristique et à déduire, le cas échéant, un écartement courant de l'aéronef par rapport au trajet à suivre, ledit écartement courant représentant l'information d'assistance.

En outre, avantageusement, l'étape de surveillance comprend au moins :
- une étape de réception de données comprenant la réception de données relatives à un ou plusieurs éléments caractéristiques comprenant un élément caractéristique obligatoire correspondant à un marquage d'arrêt au sol, ledit ou lesdits éléments caractéristiques étant relatifs à un point d'attente d'une piste de l'aérodrome ; et
- une étape de traitement de données au moins pour déterminer, à partir des données reçues à l'étape de réception de données et d'une éventuelle autorisation du contrôle aérien, une autorisation ou une interdiction d'entrer sur la piste, ladite autorisation ou ladite interdiction représentant l'information d'assistance.

Dans un mode de réalisation préféré, l'étape de surveillance utilise une carte dynamique de l'aérodrome (« Dynamic Airport Map » en anglais).

Par ailleurs, dans un premier mode de réalisation, l'étape d'assistance comprend au moins une étape (de présentation d'informations) au moins pour présenter, notamment pour afficher, des informations d'aide au pilotage et/ou d'aide à la navigation au sol dans le poste de pilotage de l'aéronef (par exemple par l'intermédiaire d'un affichage de type tête haute ou un affichage de type tête basse).

En outre, dans un second mode de réalisation, en variante ou en complément du premier mode de réalisation précité, l'étape d'assistance comprend au moins une étape pour mettre en oeuvre un pilotage au moins partiellement automatique de l'aéronef.

Dans ce second mode de réalisation, l'étape d'assistance peut être réalisée selon l'une de quatre variantes (de réalisation) différentes. Avantageusement, l'étape d'assistance comprend :
- dans une première variante, une sous-étape de maintien de cap au moins pour réaliser un maintien automatique par l'aéronef d'un cap à suivre, reçu à l'étape de réception ;
- dans une deuxième variante, une sous-étape de suivi de ligne droite au moins pour réaliser un suivi automatique par l'aéronef d'une ligne droite, reçue à l'étape de réception ;
- dans une troisième variante, une sous-étape de suivi de ligne droite et de gestion de vitesse pour réaliser, à la fois, un suivi automatique par l'aéronef d'une ligne droite, reçue à l'étape de réception, et une gestion automatique de la vitesse de l'aéronef ; et
- dans une quatrième variante, une sous-étape de pilotage automatique au moins pour mettre en oeuvre un pilotage automatique de l'aéronef pour suivre une route, reçue à l'étape de réception.

La présente invention concerne également un système d'assistance d'un pilote d'un aéronef lors d'un roulement au sol de l'aéronef sur une voie de circulation d'un aérodrome.

Selon l'invention, ledit système d'assistance (destiné à être monté sur l'aéronef) comporte au moins :
- une unité de surveillance configurée pour surveiller l'aérodrome de manière à pouvoir détecter au moins un élément caractéristique d'une voie de circulation de l'aérodrome, pour déterminer une position relative courante de l'aéronef par rapport à l'élément caractéristique détecté, et pour en déduire au moins une information dite d'assistance ; et
- une unité dite d'assistance configurée pour assister le pilote de l'aéronef lors du roulement sur l'aérodrome (afin de faire suivre un trajet à l'aéronef) en prenant en compte au moins ladite information d'assistance.

Avantageusement, l'unité de surveillance comporte au moins odomètre au moins pour mettre en oeuvre une odométrie visuelle afin de déterminer au moins la position de l'aéronef permettant notamment d'obtenir ladite position relative courante de l'aéronef.

De préférence, ledit système d'assistance comporte une unité de réception configurée pour recevoir au moins une partie d'un trajet à suivre par l'aéronef sur l'aérodrome.

La présente invention concerne également un aéronef, en particulier un avion de transport, qui comporte au moins un système d'assistance, tel que celui décrit ci-dessus.

### Brève description des figures

Les figures annexées feront bien comprendre comment l'invention peut être réalisée. Sur ces figures, des références identiques désignent des éléments semblables.
La figure 1 est le schéma synoptique d'un système d'assistance, selon un mode de réalisation particulier de l'invention.
La figure 2 est une vue schématique, en perspective, d'une partie d'un aérodrome sur lequel circule un aéronef équipé d'un système d'assistance.
La figure 3 illustre schématiquement les étapes principales d'un procédé d'assistance, selon un mode de réalisation particulier de l'invention.

### Description détaillée

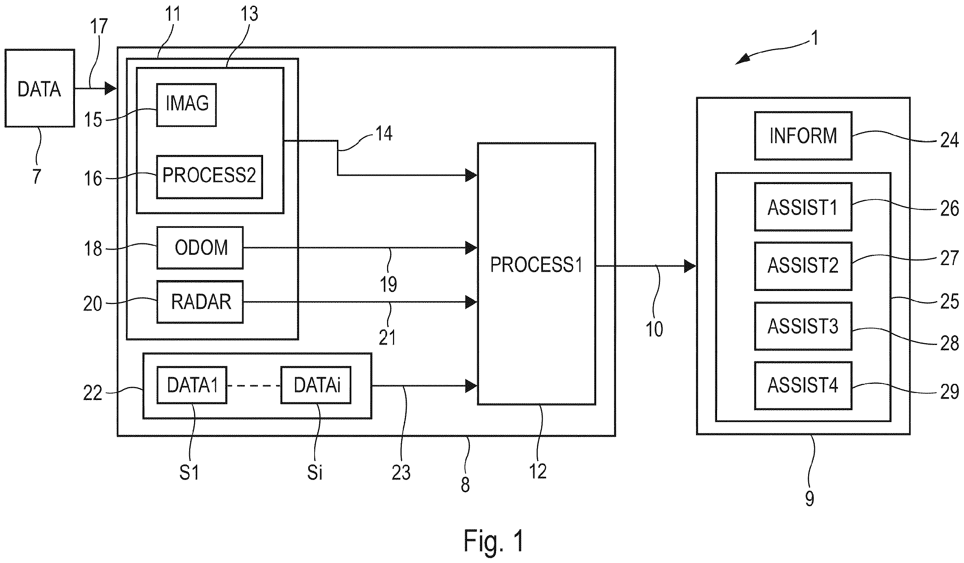

Le système 1, représenté schématiquement sur la figure 1 et permettant d'illustrer l'invention, est destiné à équiper un aéronef AC, en particulier un avion de transport.

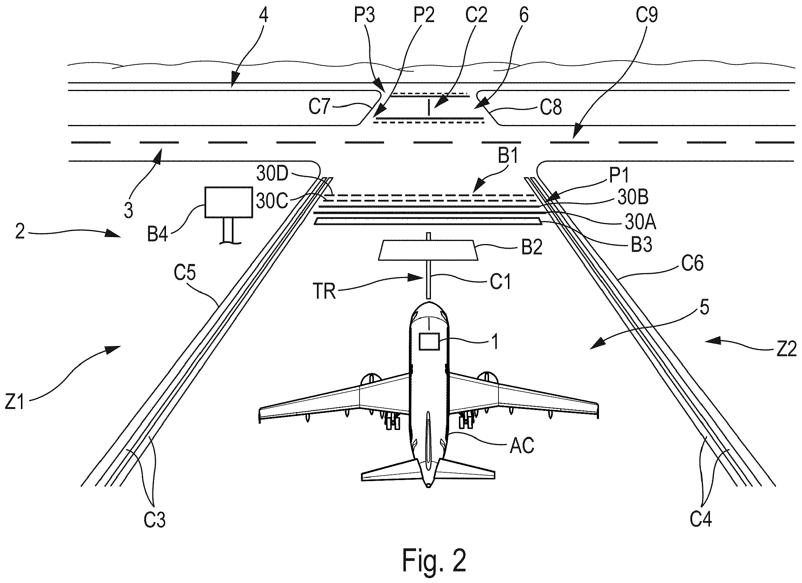

Ce système 1 (qui est embarqué sur l'aéronef AC, comme représenté très schématiquement sur la figure 2) est destiné à assister le pilote de l'aéronef AC, notamment lorsqu'il roule sur une voie de circulation d'un aérodrome 2, comme dans l'exemple de la figure 2.

Dans le cadre de la présente invention, une voie de circulation d'un aérodrome 2 correspond, comme représenté sur la figure 2 :
- soit à une piste (« runway » en anglais), telle que des pistes 3 et 4, qui est destinée au décollage et/ou à l'atterrissage des aéronefs ;
- soit à une voie de roulement (« taxiway » en anglais), telles que des voies de roulement 5 et 6, qui permet à un aéronef de circuler sur l'aérodrome 2 notamment pour faire le trajet (en roulant sur le sol) entre une piste (telle que la piste 3 ou 4) utilisée pour le décollage ou l'atterrissage et une zone de stationnement (non représentée).

Sur l'exemple de la figure 2, l'aéronef AC roule sur la voie de roulement 5 à destination de la piste 3.

Pour certains modes de mise en oeuvre de la présente invention, on utilise, comme précisé ci-dessous :
- des éléments dits caractéristiques qui sont relatifs à des voies de circulation de l'aérodrome et qui sont identifiés par des références Cn dans la description suivante, n étant un entier ; et/ou
- des éléments dits caractéristiques qui sont relatifs à un point d'attente Pi (i étant un entier) de voies de roulement et qui sont identifiés par des références Bm dans la description suivante, m étant un entier. Un point d'attente Pi est un point d'une voie de roulement au niveau duquel l'aéronef AC attend (s'arrête) avant d'entrer dans une piste adjacente, comme illustré pour des points d'attente P1, P2 et P3 sur la figure 2.

Sur la figure 2, on a représenté, à titre d'illustration non limitative, des exemples d'éléments caractéristiques Cn ainsi que des exemples d'éléments caractéristiques Bm.

Ainsi, plus précisément, sur l'exemple de la figure 2, la voie de roulement 5 est pourvue d'une ligne centrale C1 (ou axe central), par exemple en jaune, et elle est délimitée latéralement, de part et d'autre, par des lignes C3 et C4 doubles de bord de voie, par exemple également en jaune. Sur la figure 2, on a également représenté une ligne centrale C2 de la voie de roulement 6 et une ligne centrale C9 de la piste 3, et des lignes C5 et C6 entre une zone (à savoir la piste 3) pourvue d'un revêtement pour la circulation et une zone Z1, Z2 dépourvue d'un tel revêtement.

De plus, sur l'exemple de la figure 2, on a également représenté, pour le point d'attente P1 de la piste 3 :
- un marquage B1 d'arrêt au sol, qui représente un élément caractéristique obligatoire ;
- un marquage B2 auxiliaire au sol ;
- un indicateur lumineux B3 associé au marquage B1 d'arrêt au sol ; et
- un panneau d'instructions B4.

Le système 1 est actif sur l'aéronef AC pendant une phase de roulement au sol (« taxiing ») de l'aéronef AC, comme dans l'exemple de la figure 2.

Ledit système 1 comporte, comme représenté sur la figure 1 :
- une unité de réception 7 configurée pour recevoir au moins une partie d'un trajet TR à suivre par l'aéronef AC sur l'aérodrome 2 (figure 2) ;
- une unité de surveillance 8 reliée par l'intermédiaire d'une liaison 17 à l'unité de réception 7 et configurée :
   - pour surveiller l'aérodrome 2 de manière à pouvoir détecter au moins un élément caractéristique d'une voie de circulation 5 empruntée par l'aéronef AC, à savoir au moins un élément caractéristique Bm (m étant un entier) et/ou au moins élément caractéristique Cn (n étant un entier) en fonction du mode de réalisation envisagé, comme précisé ci-dessous ;
   - pour déterminer une position relative courante de l'aéronef AC par rapport à l'élément caractéristique Bm détecté et/ou à l'élément caractéristique Cn détecté ; et
   - pour en déduire au moins une information dite d'assistance ; et
- une unité d'assistance 9 reliée par l'intermédiaire d'une liaison 10 à l'unité de surveillance 8 et configurée pour assister le pilote de l'aéronef AC lors du roulement sur l'aérodrome 2, en prenant en compte au moins ladite information d'assistance (reçue de l'unité de surveillance 8).

L'unité de réception 7 est configurée pour permettre d'entrer dans le système 1 des données (DATA pour « Data entering device » en anglais) et notamment l'une des informations suivantes représentant au moins une partie de trajet TR : le cap à suivre par l'aéronef AC ou la route à suivre par l'aéronef AC. Dans l'exemple de la figure 2, la partie de trajet TR, juste à l'avant de la position courante de l'aéronef AC, est une ligne droite confondue avec l'élément caractéristique C1 qui correspond à la ligne centrale de la voie de roulement 5. Dans cet exemple, la partie de trajet TR correspond donc, soit à un ligne droite confondue avec la ligne centrale C1 (et représentant par exemple une partie de la route à suivre par l'aéronef AC), soit à un cap correspondant au cap suivant lequel est orienté ladite ligne centrale C1.

L'unité de surveillance 8 comprend un ensemble 11 de sources de données permettant au système 1 de recevoir des données sur l'environnement externe de l'aéronef AC. L'ensemble 11 comprend des sources de données, précisées ci-dessous, qui équipent généralement déjà l'aéronef AC.

L'unité de surveillance 8 comprend également un dispositif de traitement de données 12 (PROCESS1 pour « data Processing device » en anglais) configuré pour réaliser différents traitements et calculs précisés ci-dessous. Le dispositif de traitement de données 12 est relié aux différentes sources de données de l'ensemble 11.

Dans un mode de réalisation particulier, l'ensemble 11 de sources de données comprend un système de détection optique 13, de préférence un système de détection visuelle.

Ce système de détection optique 13 qui est reliée par l'intermédiaire d'une liaison 14 au dispositif de traitement de données 12 comprend, comme représenté sur la figure 1 :
- un dispositif de prise d'images 15 (IMAG pour « Imaging device » en anglais) configuré pour prendre des images de l'environnement extérieur de l'aéronef AC ; et
- un dispositif de traitement d'images 16 (PROCESS2 pour « image Processing device » en anglais) configuré pour traiter au moins certaines des images prises par le dispositif de prise d'images 15 de manière notamment à détecter, le cas échéant, un élément caractéristique Cn (n étant un entier) ou Bm (m étant un entier), lorsque cet élément caractéristique Cn ou Bm (précisé ci-dessous), est représenté sur au moins l'une des images traitées (c'est-à-dire dont une représentation se retrouve sur l'image).

De préférence, le dispositif de prise d'images 15 prend des images dans le visible et le système de 13 correspond alors à un système de détection visuelle. En variante, il peut également prendre des images à partir de rayonnements présentant d'autres longueurs d'onde, par exemple dans l'infrarouge, notamment en cas de visibilité réduite.

En outre, le dispositif de traitement d'images 16 met en oeuvre au moins l'une des techniques suivantes, précisées ci-après :
- une technique utilisant de l'intelligence artificielle ;
- une technique de traitement d'images.

En outre, dans un mode de réalisation particulier, l'ensemble 11 comprend également, comme représenté sur la figure 1, un odomètre 18 (ODOM pour « Odometer » en anglais), relié par l'intermédiaire d'une liaison 19 au dispositif de traitement de données 12 et configuré pour mettre en oeuvre une odométrie visuelle afin notamment de déterminer, de façon usuelle, le mouvement ou la dynamique (position et vitesse) de l'aéronef AC.

Par ailleurs, dans un mode de réalisation particulier, l'ensemble 11 comprend un radar 20 relié par l'intermédiaire d'une liaison 21 au dispositif de traitement de données 12 et configuré pour détecter une limite (telle que la limite C5, C6 de la figure 2) entre une zone pourvue d'un revêtement pour la circulation et une zone (telle que la zone Z1, Z2 de la figure 2) dépourvue d'un tel revêtement, comme précisé ci-dessous.

Par ailleurs, dans un mode de réalisation particulier, l'unité de surveillance 7 comporte également un ensemble 22 de sources de données S1, ..., Si (DATA1, ..., DATAi pour « Data sources » en anglais), i étant un entier. Cet ensemble 22 comprend au moins l'une des sources de données (ou d'informations) S1 à Si usuelles suivantes, qui équipent généralement déjà l'aéronef AC :
- un système de référence inertielle ;
- un système de positionnement par satellites ;
- un odomètre ;
- un tachymètre ;
- un capteur optoélectronique qui peut, par exemple, correspondre au système de détection optique 13.

De plus, dans ce mode de réalisation particulier, le dispositif de traitement de données 12 (qui est relié par l'intermédiaire d'une liaison 23 à l'ensemble 22) est configuré pour déterminer une position dite absolue de l'aéronef, à l'aide d'au moins une information (de position) issue d'au moins l'une desdites sources de données S1 à Si.

Dans un mode de réalisation particulier, le dispositif de traitement de données 12 détermine une position relative consolidée à l'aide de données (ou d'informations) issues de plusieurs sources de données S1 à Si de l'ensemble 22.

Par ailleurs, dans un mode de réalisation particulier :
- au moins l'une des sources de données de l'ensemble 11 est configurée pour générer des données relatives à au moins l'un des éléments caractéristiques Cn suivants de la voie de circulation, précisés ci-après :
   - une ligne centrale de la voie de circulation ;
   - une ligne de bord de la voie de circulation ;
   - une limite entre une zone pourvue d'un revêtement pour la circulation et une zone dépourvue d'un tel revêtement ; et
- le dispositif de traitement de données 12 est configuré pour traiter ces données reçues de la source de données de l'ensemble 11 de manière à déterminer la position relative courante de l'aéronef par rapport à l'élément caractéristique Cn et pour déduire, le cas échéant, un écartement courant de l'aéronef par rapport au trajet TR à suivre, ledit écartement courant représentant l'information d'assistance.

En outre, dans un autre mode de réalisation particulier :
- au moins l'une des sources de données de l'ensemble 11 est configurée pour recevoir des données relatives à un ou plusieurs éléments caractéristiques Bm (relatifs à un point d'attente d'une voie de circulation correspondant à une piste de l'aérodrome), comprenant un élément caractéristique obligatoire correspondant à un marquage d'arrêt au sol, et éventuellement un ou plusieurs des éléments caractéristiques suivants :
   - un marquage auxiliaire au sol ;
   - un indicateur lumineux ;
   - un marquage ou un panneau d'instructions ; et
- le dispositif de traitement de données 12 est configuré pour déterminer, à partir de ces données reçues de la source de données de l'ensemble 11 et d'une éventuelle autorisation du contrôle aérien, une autorisation ou une interdiction d'entrer sur la piste, ladite autorisation ou ladite interdiction (d'entrer sur la piste) représentant l'information d'assistance.

Par ailleurs, dans un premier mode de réalisation, l'unité d'assistance 9 comprend un dispositif de présentation d'informations 24 (INFORM pour « Information présentation device » en anglais). Ce dispositif de présentation d'informations 24 est configuré pour présenter une ou des informations d'assistance, à savoir des informations d'aide au pilotage et/ou d'aide à la navigation au sol, dans le poste de pilotage de l'aéronef AC. Ces informations d'assistance peuvent, notamment, sensibiliser le pilote sur la situation concernant l'aéronef, en particulier par rapport au trajet à suivre. Dans un mode de réalisation préféré, le dispositif de présentation d'informations 24 comprend au moins un dispositif d'affichage usuel de l'aéronef, qui est susceptible de présenter les informations d'assistance, par l'intermédiaire d'un affichage de type tête haute et/ou d'un affichage de type tête basse. Le dispositif de présentation d'informations 24 peut également comporter un dispositif usuel de l'aéronef, pour présenter (émettre) les informations d'assistance sous forme de messages sonores dans le poste de pilotage.

En outre, dans un second mode de réalisation, en variante ou en complément dudit premier mode de réalisation, l'unité d'assistance 9 comprend un système d'assistance 25 configuré pour mettre en oeuvre un pilotage au moins partiellement automatique de l'aéronef AC

Dans ce second mode de réalisation, le système d'assistance 25 de l'unité d'assistance 9 comporte l'un des dispositifs suivants :
- dans une première variante, un dispositif de maintien 26 configuré pour réaliser un maintien automatique par l'aéronef d'un cap à suivre ;
- dans une deuxième variante, un dispositif de suivi 27 configuré pour réaliser un suivi automatique par l'aéronef d'une ligne droite ;
- dans une troisième variante, un dispositif de suivi et de gestion 28 configuré pour réaliser, à la fois, un suivi automatique par l'aéronef d'une ligne droite et une gestion automatique de la vitesse de l'aéronef ; ou
- dans une quatrième variante, un dispositif de pilotage automatique 29 configuré pour mettre en oeuvre un pilotage automatique de l'aéronef pour suivre une route.

Bien que, pour des raisons de simplification du dessin, les quatre dispositifs 26, 27, 28 et 29 d'assistance soient représentés schématiquement sur la figure 1, le système d'assistance 25 de l'unité d'assistance 9 comprend uniquement l'un de ces dispositifs 26, 27, 28 et 29 d'assistance (ASSIST1 à ASSIST 4 pour « Assistance device » en anglais) en fonction de la variante de réalisation qui est implémentée dans le système 1.

Le système 1 peut ainsi mettre en oeuvre une présentation d'informations par l'intermédiaire du dispositif de présentation d'informations 24 et/ou une assistance (plus ou moins automatisée) par l'intermédiaire du système d'assistance 25.

Ainsi, comme cela sera décrit de façon plus détaillée ci-dessous, le système 1 est en mesure, pendant une phase de roulement au sol (de type « taxiing ») de l'aéronef AC, d'assister le pilote de l'aéronef AC pour faire suivre audit aéronef AC le trajet (cap ou route) qu'il doit suivre.

Dans le cadre de la présente invention, une assistance, mise en oeuvre par le système 1, correspond notamment à l'une des assistances suivantes :
- une assistance du pilote en termes de vitesse et de suivi en ligne droite ;
- une assistance du pilote en termes de vitesse et de suivi de trajectoire (lignes droites et virages) ; et
- une assistance entièrement automatisée.

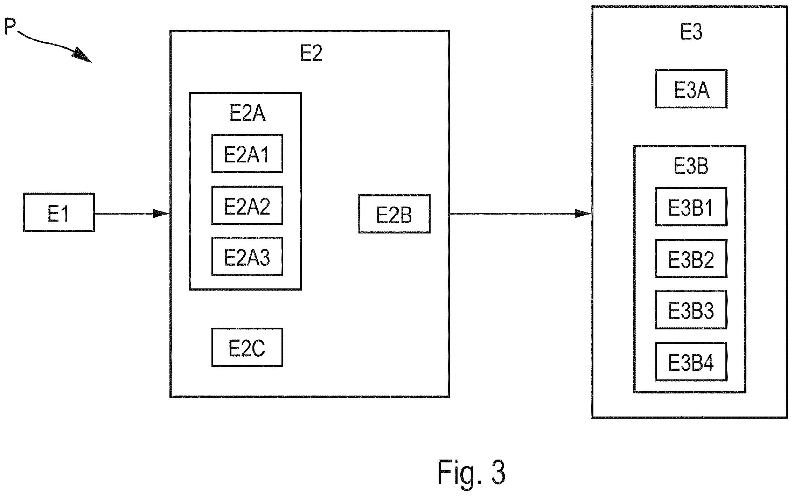

Le système 1, tel que décrit ci-dessus, est destiné à mettre en oeuvre un procédé P d'aide à l'assistance tel que présenté ci-dessous en référence à la figure 3.

Ledit procédé P comporte les étapes suivantes :
- une étape de réception de trajet E1, mise en oeuvre par l'unité de réception 7 (figure 1), au moins pour recevoir au moins une partie d'un trajet TR à suivre par l'aéronef AC sur l'aérodrome 2 (figure 2) ;
- une étape de surveillance E2, mise en oeuvre par l'unité de surveillance 8, au moins pour surveiller l'aérodrome 2 de manière à pouvoir détecter au moins un élément caractéristique d'une voie de circulation 5 empruntée par l'aéronef AC, pour déterminer une position relative courante de l'aéronef AC par rapport à l'élément caractéristique détecté, et pour en déduire au moins une information d'assistance ; et
- une étape d'assistance E3, mise en oeuvre par l'unité d'assistance 9, au moins pour assister le pilote de l'aéronef lors du roulement sur l'aérodrome en prenant en compte au moins ladite information d'assistance déduite à l'étape de surveillance E2.

Le système 1 est activé et le procédé P est mis en oeuvre lorsque l'aéronef AC est dans une phase de roulement au sol (« taxiing »). Cette activation (du système 1 pour la mise en oeuvre du procédé P) est réalisée automatiquement, le système 1 ayant connaissance de façon automatique et usuelle de la mise en oeuvre d'une phase de roulement. En outre, le système 1 est désactivé à la fin de la phase de roulement au sol. Cette désactivation est réalisée soit automatiquement, soit manuellement par le pilote en actionnant un élément de désactivation (non représenté) du système 1.

L'étape de réception E1 comprend la réception, à l'aide de l'unité de de réception 7, d'une information indiquant au moins une partie du trajet TR à suivre, c'est-à-dire au moins la partie de trajet TR que l'aéronef doit suivre à partir de sa position courante. Cette information peut correspondre à un cap ou à une route.

Pour ce faire, dans un mode de réalisation particulier, l'unité de réception 7 est configurée pour, à l'étape de réception de trajet E1, insérer (ou entrer) la route dans le système 1, soit en la recevant directement du contrôle aérien ATC (pour « Air Traffic Control » en anglais) par l'intermédiaire d'un message correspondant reçu via une liaison de transmission de données, soit en réalisant une extraction (de l'autorisation d'entrée) d'un message audio du contrôle aérien à destination du pilote de l'aéronef, à l'aide d'une transcription vocale telle que précisée ci-dessous.

En complément ou en variante, l'unité de réception 7 est configurée pour permettre au pilote d'insérer (ou d'entrer) manuellement le trajet à suivre (route ou cap) dans le système 1, à l'étape de réception de trajet E1, et également de modifier un trajet déjà entré dans le système 1.

Dans un mode de réalisation préféré, le procédé P utilise une carte dynamique usuelle de l'aérodrome.

Par ailleurs, dans un mode de réalisation préféré, l'étape de surveillance E2 comprend au moins :
- une étape de réception de données E2A pour recevoir des données relatives, notamment, à au moins un élément caractéristique de la voie de circulation empruntée par l'aéronef AC ; et
- une étape de traitement de données E2B pour traiter les données reçues à l'étape de réception de données E2A et pour déterminer au moins une information d'assistance.

L'étape de réception de données E2A comprend une étape de détection optique E2A1 mise en oeuvre par le système de détection optique 13. Cette étape de détection optique E2A1 comprend :
- une sous-étape de prise d'images, mise en oeuvre par le dispositif de prise d'images 15, pour prendre des images de l'environnement extérieur de l'aéronef AC. Le dispositif de prise d'images 15 fournit, de façon usuelle, des images 2D de la scène à l'extérieur et vers l'avant de l'aéronef, et ceci dans le spectre visible ou dans le spectre infrarouge (notamment en cas de faible visibilité) ; et
- une sous-étape de traitement d'images, mise en oeuvre par le dispositif de traitement d'images 16, pour traiter au moins certaines des images prises à ladite sous-étape de prise d'images de manière à détecter le cas échéant un élément caractéristique, lorsque cet élément caractéristique est représenté sur au moins l'une des images traitées.

L'étape de détection optique E2A1 est mise en oeuvre pour détecter tous les éléments caractéristiques (visuels) qui sont susceptibles d'être pris en compte lors de la mise en oeuvre de l'étape de surveillance E2.

Pour mettre en oeuvre l'étape de détection optique E2A1, l'aéronef AC est équipé d'un ou de plusieurs dispositifs de prise d'images 15, à savoir de préférence des caméras, pour prendre (ou capturer) les images de l'environnement extérieur (à la sous-étape de prise d'images) pendant le roulement de l'aéronef AC et fournir au dispositif de traitement d'images 16 les images capturées.

Dans une première variante de réalisation, la sous-étape de traitement d'images met en oeuvre une technique utilisant de l'intelligence artificielle. Dans cette première variante, un ou plusieurs algorithmes d'intelligence artificielle intégrés dans le dispositif de traitement d'images 16 utilisent une image comme entrée, et le cas échéant détectent et localisent une représentation de l'élément caractéristique dans l'image. Différentes approches d'intelligence artificielle peuvent être utilisées, y compris des techniques d'apprentissage automatique (« machine learning » en anglais) et/ou d'apprentissage profond (« deep learning » en anglais).

Dans un mode de réalisation préféré, dans lequel le dispositif de traitement d'images 16 est basé sur de l'intelligence artificielle utilisant un système d'apprentissage automatique (« machine learning »), le système d'apprentissage automatique utilise, pour l'apprentissage, des données collectées préalablement qui sont représentatives de situations variées et conformes à celles qui peuvent être rencontrées par un aéronef circulant sur un aérodrome. Pour ce faire, des caméras sont installées sur un ou plusieurs aéronefs. Ces caméras sont identiques à celles utilisées par le système 1 ou tout au moins présentent des caractéristiques techniques proches de celles utilisées par le système 1. De plus, ces caméras sont installées sur cet aéronef ou ces aéronefs aux mêmes emplacements, ou à des emplacements aussi proches que possible, que ceux des caméras du système 1. Des images sont prises lors du roulement sur des aérodromes de l'aéronef ou des aéronefs, ainsi équipés, et les images prises sont stockées. L'ensemble des images stockées sont ensuite collectées. Les prises d'images sont réalisées sur des aérodromes différents, pour des conditions de luminosité différentes et variées (par exemple le jour, la nuit, ...) et des conditions météorologiques différentes et variées (par exemple par temps de soleil, de pluie, de neige, ...) de manière à prendre en compte l'ensemble des principales situations et conditions susceptibles d'être rencontrées par un aéronef équipé du système 1. L'ensemble des images ainsi collectées sont utilisées par le système d'apprentissage de l'intelligence artificielle du dispositif de traitement d'images 16.

Différentes techniques de traitement à base d'intelligence artificielle peuvent fournir les informations recherchées. On peut citer, à titre d'illustration :
- une détection d'objet. Dans ce cas, si un élément caractéristique est représenté dans l'image, l'algorithme d'intelligence artificielle le détecte et le localise spatialement dans l'image. Ces opérations peuvent peut être réalisées en tenant compte notamment de la géométrie, la couleur, la symétrie, ..., avec des algorithmes d'apprentissage usuels et automatiques, ou être mises en oeuvre complètement par un algorithme d'apprentissage profond qui est préalablement entraîné afin de trouver les meilleures caractéristiques pour détecter les objets ;
- une segmentation de l'image. Dans ce cas, chaque pixel de l'image est classé comme faisant partie ou non d'un élément caractéristique, et si un élément caractéristique est représenté dans l'image, l'ensemble des pixels relatifs à cet élément caractéristique permettent de le détecter et le localiser.

Dans une deuxième variante de réalisation, la sous-étape de traitement d'images met en oeuvre une technique usuelle dite de traitement d'image.

On sait que les techniques de traitement d'images traitent les pixels de l'image, en utilisant des filtres et des techniques usuelles de traitement du signal, pour récupérer des points d'intérêt et des informations géométriques dans l'image afin de vérifier si un élément caractéristique est représenté dans l'image, et le cas échéant le localiser spatialement dans l'image.

En outre, dans une troisième variante de réalisation, la sous-étape de traitement d'images met en oeuvre, à la fois, une technique (telle que celle décrite ci-dessus) utilisant de l'intelligence artificielle et une technique de traitement d'images (telle que celle également décrite ci-dessus).

La calibration du dispositif de prise d'images 15 (paramètres intrinsèques et extrinsèques) permet alors au dispositif de traitement d'images 16 du système 1 de déterminer la position relative de l'aéronef AC par rapport l'élément caractéristique détecté.

A chaque instant de prise d'image considéré, la ou les caméras prennent une nouvelle image qui est ensuite traitée. Ainsi, une trajectoire de l'aéronef peut être obtenue par la prise en compte des positions successives de l'aéronef par rapport à l'élément caractéristique.

L'étape de détection optique E2A1, mise en oeuvre par le système de détection optique 13, peut être utilisée notamment pour détecter des lignes au sol, comme précisé ci-dessous. Leurs caractéristiques spécifiques (par exemple leur largeur, leur couleur, les lignes continues en contraste avec le revêtement) peuvent aider à les détecter et à les suivre.

Par ailleurs, dans un mode de réalisation préféré, l'étape de réception de données E2A comprend également une étape d'odométrie E2A2. Cette étape d'odométrie E2A2 est mise en oeuvre à l'aide de l'odomètre 18, pour réaliser une odométrie visuelle afin de déterminer au moins la position de l'aéronef AC et plus globalement le mouvement (ou la dynamique), à savoir à la fois la position et la vitesse, de l'aéronef AC.

L'odométrie visuelle permet d'estimer la position et l'orientation de l'aéronef AC grâce au mouvement capté par un ou des capteurs optiques (ou capteurs de vision) usuels.

Dans une mise en oeuvre particulière, l'étape d'odométrie (visuelle) E2A2, réalisée au moins par l'odomètre 18, comprend les opérations successives a) à f) suivantes :
a) acquisition d'images successives à l'aide d'au moins un capteur optique monté sur l'aéronef AC ;
b) réalisation d'un prétraitement (par exemple une suppression de la distorsion ou un filtrage) sur chaque image acquise ;
c) détection de caractéristiques (par exemple des coins, des lignes, des points saillants) dans l'image courante, que l'on fait correspondre à l'image précédente (dans la succession d'images) pour construire un flux optique ;
d) suppression de toute valeur aberrante dans le champ du flux optique ;
e) estimation du mouvement du capteur optique à partir du flux optique ; et
f) estimation du mouvement (position et vitesse) de l'aéronef, à partir du mouvement du capteur optique et de paramètres de calibrage extrinsèques connus du capteur optique.

Pour ce faire, l'odomètre comprend un ou plusieurs capteurs optiques pour acquérir les images successives et au moins une unité de traitement (intégrée dans l'odomètre 18 de la figure 1 ou faisant partie du dispositif de traitement de données 12) qui est configurée pour mettre en oeuvre les opérations b) à f) précitées.

La position et/ou le mouvement de l'aéronef, ainsi estimés, sont utilisés pour aider à déterminer une information d'assistance à l'étape de traitement de données E2B. L'étape de traitement de données E2B est configurée pour traiter ces données de position de manière à déterminer une position absolue de l'aéronef AC (c'est-à-dire une position de l'aéronef AC sur l'aérodrome 2, clairement définie en tant que telle) et/ ou une position relative de l'aéronef AC par rapport à un élément caractéristique.

Par ailleurs, dans un mode de réalisation particulier, l'étape de réception de données E2A comprend également une étape de détection E2A3 comprenant les opérations suivantes :
- détecter, à l'aide du radar 20, une limite C5, C6 (figure 2) entre une zone pourvue d'un revêtement pour la circulation de la voie de circulation utilisée (par exemple la voie de roulement 5 dans l'exemple de la figure 2) et une zone Z1, Z2 dépourvue d'un revêtement pour la circulation ; et
- déterminer une position relative courante, à savoir la position relative de cette limite C5, C6 (ainsi détectée) par rapport à la position courante l'aéronef AC.

Une telle information de position relative courante est reçue (via la liaison 21) et est utilisée par le dispositif de traitement de données 12, à l'étape de traitement de données E2B.

Cette information permet au dispositif de traitement de données 12 de vérifier si l'aéronef AC est correctement positionné (à savoir centré) sur la voie de circulation 5.

Cette information peut également être utilisée par le dispositif de traitement de données 12, en complément des informations (notamment de position) obtenues à l'une au moins des étapes E2A1 et E2A2, pour déterminer une position relative courante consolidée, ce qui permet d'augmenter la précision de la position relative courante de l'aéronef.

Par ailleurs, dans un mode de réalisation particulier, l'étape de surveillance E2 comprend également une étape de réception de données E2C comprenant la réception de données de position de l'aéronef, à partir d'au moins l'une des sources de données S1 à Si de l'ensemble 22 (figure 1).

De préférence, à cette seconde étape de réception de données E2C, le système 1 reçoit des données de position d'au moins l'une des sources de données suivantes de l'ensemble 22 de l'aéronef AC :
- un système de référence inertielle ;
- un système de positionnement par satellites ;
- un odomètre ;
- un tachymètre ;
- un capteur optoélectronique.

Dans un mode de réalisation particulier, l'étape de traitement de données E2B est configurée pour traiter les données de position, reçues à l'étape de réception de données E2C, de manière à déterminer une position absolue de l'aéronef AC, c'est-à-dire une position de l'aéronef AC sur l'aérodrome 2, clairement définie en tant que telle.

En outre, dans un mode de réalisation préféré, l'étape de traitement de données E2B met en oeuvre une opération de fusion de données. Cette opération de fusion de données fusionne les données reçues d'au moins deux sources de données différentes de l'ensemble 22, à l'étape de réception de données E2C. Cette opération de fusion de données, de type usuel, permet de consolider les données reçues, et notamment d'obtenir une position absolue particulièrement précise.

Par ailleurs, dans un mode de réalisation particulier, à l'étape de surveillance E2 :
- l'étape de réception de données E2A comprend la réception de données relatives à au moins un élément caractéristique Cn d'une voie de circulation de l'aérodrome 2, et notamment de la voie de circulation 5 empruntée par l'aéronef ; et
- l'étape de traitement de données E2B traite les données reçues à l'étape de réception de données E2A de manière à déterminer la position relative courante de l'aéronef AC par rapport à cet élément caractéristique C1 et déduit, le cas échéant, un écartement courant de l'aéronef par rapport au trajet à suivre. Cet écartement courant de l'aéronef AC, par exemple par rapport à la ligne centrale C1 de la voie de roulement 5 sur laquelle se déplace l'aéronef AC (figure 2), représente l'information d'assistance, qui sera utilisée à l'étape d'assistance E3 pour assister le pilote de l'aéronef, comme précisé ci-dessous.

Dans ce mode de réalisation particulier, le ou les éléments caractéristiques Cn relatifs à une voie de circulation comprennent l'un des éléments suivants :
- une ligne centrale de la voie de circulation, telle que la ligne centrale C1 de la voie de roulement 5, la ligne centrale C9 de la piste 3 et la ligne centrale C2 de la voie de roulement 6, comme représenté sur la figure 2 ;
- une ligne de bord de la voie de circulation, telle que les lignes de bord C3 et C4 de la voie de roulement 5 de la figure 2 ;
- une limite C5, C6, C7, C8 entre une zone (voies de roulement 5 et 6) pourvue d'un revêtement pour la circulation sur la voie de circulation et une zone Z1, Z2 (figure 2) dépourvue d'un revêtement pour la circulation, telle que par exemple les limites C5 et C6 de la voie de roulement 5 et les limites C7 et C8 de la voie de roulement 6.

En outre, dans un autre mode de réalisation particulier, à l'étape de surveillance E2 :
- l'étape de réception de données E2A comprend la réception de données relatives à un ou plusieurs éléments caractéristiques Bm, dont l'élément caractéristique B1 obligatoire, relatif à un point d'attente P1, P2, P3 d'une voie de circulation correspondant à une piste 3, 4 de l'aérodrome 2 (figure 2) ; et
- l'étape de traitement de données E2B détermine, à partir des données reçues à l'étape de réception de données E2A et d'une éventuelle autorisation du contrôle aérien (reçue de la manière précisée ci-dessous), une autorisation ou une interdiction d'entrer sur la piste 3, 4.

Cette autorisation ou cette interdiction (déterminée ainsi à l'étape de traitement de données E2B) représente l'information d'assistance, qui sera utilisée à l'étape d'assistance E3 pour assister le pilote de l'aéronef, comme précisé ci-dessous.

Les éléments caractéristiques Bm relatifs à un point d'attente Pi comprennent donc au moins l'élément caractéristique B1 obligatoire. Cet élément caractéristique B1 obligatoire est un marquage d'arrêt au sol. Il est conforme à un modèle usuel qui est obligatoire pour toutes les pistes telles que les pistes 3 et 4. De façon usuelle, il est formé d'un ensemble comprenant deux segments de droite 30A et 30B et deux lignes 30C et 30D de traits interrompus, parallèles entre eux et orthogonaux à la ligne centrale de la piste considérée (telle que la ligne centrale 8 par exemple), comme représenté à titre d'illustration sur la figure 2 pour la piste 3.

Dans un mode de réalisation préféré, ledit ou lesdits éléments caractéristiques Bm relatifs à un point d'attente Pi comprennent également au moins l'un des éléments caractéristiques auxiliaires suivants, comme représenté sur la figure 2 pour le point d'attente P1 :
- un marquage B2 auxiliaire au sol, avant le point d'attente P1 ;
- un indicateur lumineux B3 associé au marquage d'arrêt au sol (élément caractéristique B1 obligatoire) du point d'attente P1 ;
- un marquage (au sol) d'instructions ou un panneau d'instructions B4 du point d'attente P1.

Les indicateurs lumineux (susceptibles d'émettre une lumière, généralement rouge, lorsqu'ils sont allumés), tels que l'indicateur lumineux B3, apportent une information visuelle sur l'autorisation du contrôle aérien d'entrer ou non sur la piste 3 associée. Ils sont positionnés au point d'attente P1 de la piste 3 associée et fonctionnent comme suit :
- lorsque le ou les indicateurs lumineux B3 sont allumés (émission d'une lumière rouge), l'aéronef AC n'a pas l'autorisation d'entrer sur la piste 3 ; et
- lorsque le ou les indicateurs lumineux B3 sont éteints, l'aéronef AC a l'autorisation d'entrer sur la piste 3.

Les indicateurs lumineux, tels que l'indicateur lumineux B3, aux points d'attente ne sont toutefois pas obligatoires sur tous les aérodromes. Par conséquent, l'absence d'indicateur lumineux allumé ne fournit aucune indication sur une situation potentielle d'incursion sur la piste. En revanche, la détection d'un indicateur lumineux allumé confirme l'absence d'une autorisation du contrôle aérien pour entrer (pénétrer) sur la piste associée.

Sur la figure 2, on a également représenté, à titre d'illustration :
- un point d'attente P2 destiné à un aéronef roulant sur la voie de roulement 6 avant d'entrer sur la piste 3 ; et
- un point d'attente P3 destiné à un aéronef roulant sur la voie de roulement 6 avant d'entrer sur la piste 4.

Concernant l'autorisation du contrôle aérien (d'entrer sur une piste), qui est utilisée à l'étape de réception de données E2A, elle peut être entrée manuellement par le pilote dans le système 1, par exemple à l'aide de l'unité de réception 7 ou d'un autre élément d'entrée (ou de saisie) manuelle. Le pilote entre l'autorisation lorsqu'elle lui a été communiquée vocalement par le contrôle aérien à l'approche de la piste considérée.

En variante ou en complément, l'autorisation du contrôle aérien, qui est utilisée à l'étape de réception de données E2A, peut être entrée automatiquement dans le système 1. A cet effet, une autorisation du contrôle aérien, émise par l'intermédiaire d'un message vocal à destination du pilote, est récupérée automatiquement par l'unité de réception 7 ou un autre élément (non représenté) d'entrée automatique de données dans le système 1.

Pour ce faire, dans une réalisation préférée, l'unité de réception 7 ou cet élément d'entrée automatique comporte, pour récupérer automatiquement une telle autorisation :
- au moins un algorithme usuel de transcription vocale (de type STT pour « Speech To Text » en anglais), basé sur l'intelligence artificielle. Cet algorithme de transcription vocale reçoit et traite les communications entrantes du contrôle aérien à destination du pilote, et transcrit, de façon usuelle, chaque message vocal d'un contrôleur aérien en un message textuel ; et
- au moins un algorithme usuel d'extraction d'informations, également basé sur l'intelligence artificielle. Cet algorithme d'extraction d'informations traite, de façon usuelle, les messages textuels (du contrôle aérien) générés par l'algorithme de transcription vocale, pour en extraire les informations d'autorisation d'entrer sur une piste. Les informations d'autorisation ainsi extraites sont communiquées à l'unité de surveillance 8 et notamment au dispositif de traitement de données 12 (figure 1).

Ensuite, l'étape d'assistance E3 du procédé P, mise en oeuvre par l'unité d'assistance 9, assiste le pilote de l'aéronef AC, lors du roulement sur l'aérodrome 2, en prenant en compte au moins la ou les informations d'assistance déduites à étape de surveillance E2.

Pour ce faire, dans un premier mode de réalisation, l'étape d'assistance E3 comprend au moins une étape E3A de présentation d'informations. Cette étape E3A présente dans le poste de pilotage de l'aéronef AC, à l'aide du dispositif de présentation d'informations 24, une ou des informations d'assistance (reçues de l'unité de surveillance 12), à savoir des informations d'aide au pilotage et/ou d'aide à la navigation au sol.

Dans un mode de réalisation préféré, le dispositif de présentation d'informations 24 comprend au moins un dispositif d'affichage qui est susceptible de présenter les informations d'assistance dans le poste de pilotage de l'aéronef AC, par l'intermédiaire d'un affichage usuel de type tête haute et/ou d'un affichage usuel de type tête basse. Le dispositif de présentation d'informations 24 peut également représenter, sur une carte qui est affichée, le trajet à suivre par l'aéronef et la position de l'aéronef par rapport à ce trajet.

A l'étape E3A, dans une variante particulière, le dispositif de présentation d'informations 24 peut également émettre les informations d'assistance sous forme de messages sonores dans le poste de pilotage.

En outre, dans un second mode de réalisation, en variante ou en complément du premier mode de réalisation, l'étape d'assistance E3 comprend une étape E3B pour mettre en oeuvre un pilotage au moins partiellement automatique de l'aéronef.

On présente ci-après, de façon non limitative, plusieurs variantes différentes possibles pour mettre en oeuvre l'étape d'assistance E3. Ces variantes sont présentées sous forme de sous-étapes E3B1 à E3B4 dont chacune met en oeuvre une assistance (plus ou moins automatisée).

Dans un premier mode de réalisation particulier, l'étape d'assistance E3B comprend une sous-étape E3B1 de maintien de cap. Cette sous-étape E3B1 réalise un maintien automatique par l'aéronef d'un cap à suivre, reçu à l'étape de réception E1.

Pour ce faire, dans une réalisation particulière, le dispositif de maintien 26 utilise des informations d'assistance reçues du dispositif de traitement de données 12, et notamment un écart de cap, et il commande automatiquement un système de pilotage usuel (par exemple en générant des ordres (ou consignes) de pilotage appropriés et en les lui communiquant) de l'aéronef de manière à annuler cet écart de cap, et ainsi à maintenir le cap de l'aéronef, tel que requis.

Cette sous-étape E3B1 est mise en oeuvre selon l'une de deux variantes, à savoir soit avec un contrôle simultané de la vitesse de l'aéronef AC, soit sans contrôle simultané de la vitesse de l'aéronef AC. En cas de contrôle simultané de la vitesse, le contrôle de la vitesse est mis en oeuvre soit par l'intermédiaire d'un limiteur de vitesse, soit en suivant un objectif de vitesse indiqué (ou entré) par le pilote.

Dans un second mode de réalisation particulier, l'étape d'assistance E3B comprend une sous-étape E3B2 de suivi de ligne droite. Cette sous-étape E3B2 réalise un suivi automatique par l'aéronef d'une ligne droite, reçue à l'étape de réception E1.

Pour ce faire, dans une réalisation particulière, le dispositif de suivi 27 utilise des informations d'assistance reçues du dispositif de traitement de données 12, et notamment un écart par rapport à la ligne centrale C1 de la voie de roulement 5 empruntée (figure 2), et il commande automatiquement un système de pilotage usuel (par exemple en générant des ordres (ou consignes) de pilotage appropriés et en les lui communiquant) de l'aéronef de manière à annuler cet écart, et ainsi à maintenir le déplacement de l'aéronef en ligne droite, tel que requis.

Dans une réalisation particulière, le suivi automatique par l'aéronef d'une ligne droite présente les caractéristiques suivantes :
- une ou plusieurs des sources de données de l'ensemble 11 détectent au moins une ligne caractéristique C1, C3, C4 (ligne centrale et/ou ligne de bord) et/ou une limite C5, C6 entre une zone pourvue d'un revêtement pour la circulation sur la voie de circulation et une zone Z1, Z2 dépourvue d'un revêtement pour la circulation (figure 2) et/ou calculent la vitesse au sol (notamment par odométrie visuelle) de l'aéronef ;
- le dispositif de traitement de données 12 réalise une fusion de données de position, issues de différentes sources de données (système de référence inertielle et/ou système de positionnement par satellites et/ou odomètre et/ou tachymètre et/ou capteur optoélectronique) de l'ensemble 22, pour fournir une position absolue précise de l'aéronef AC au sol ; et
- le dispositif suivi 27 consolide ces deux types d'informations pour fournir des ordres (ou consignes) de guidage latéral (au système de pilotage de l'aéronef) dans le but de réaliser un suivi automatique du déplacement au sol de l'aéronef AC en ligne droite.

En outre, dans un troisième mode de réalisation particulier, l'étape d'assistance E3B comprend une sous-étape E3B3 de suivi de ligne droite et de gestion de vitesse. Cette sous-étape E3B3 réalise, à la fois, un suivi automatique par l'aéronef d'une ligne droite, reçue à l'étape de réception E1, et une gestion automatique de la vitesse de l'aéronef.

Pour ce faire, dans une réalisation particulière, le dispositif de suivi et de gestion 28 utilise des informations d'assistance reçues du dispositif de traitement de données 12, et notamment un écart par rapport à la ligne centrale C1 de la voie de roulement 5 empruntée (figure 2) ainsi que des indications de vitesse, et il commande automatiquement un système de pilotage usuel (par exemple en générant des ordres (ou consignes) de pilotage appropriés et en les lui communiquant) de l'aéronef de manière à, simultanément, annuler cet écart et ainsi maintenir le déplacement de l'aéronef en ligne droite tel que requis, et adapter la vitesse de l'aéronef de façon appropriée.

Dans une réalisation particulière, la sous-étape E3B3 présente les caractéristiques suivantes :
- le système 1 obtient la route à suivre par l'aéronef, à partir de la carte dynamique de l'aéroport (qui est, par exemple, insérée dans le système 1 ou reçue via l'unité de réception 7) et de la route insérée à partir des instructions du contrôle aérien (soit manuellement par le pilote, soit automatiquement par synthèse vocale) à l'aide de l'unité de réception 7 configurée de façon appropriée ;
- en utilisant la route entrée et toutes les données concernant l'aéronef AC, le système 1 détermine et fournit des consignes de vitesse, par exemple en demandant de réduire la vitesse avant un virage, ... ; et
- en utilisant la route entrée, le système 1 détermine et fournit des consignes de guidage latéral :
   - soit en utilisant une ou plusieurs des sources de données de l'ensemble 11 pour détecter une ligne caractéristique C1, C3, C4 (ligne centrale et/ou ligne de bord) et/ou une limite C5, C6 entre une zone pourvue d'un revêtement pour la circulation sur la voie de circulation et une zone Z1, Z2 dépourvue d'un revêtement pour la circulation (figure 2) ;
   - soit en utilisant une fusion de données de position, issues de différentes sources de données (système de référence inertielle et/ou système de positionnement par satellites et/ou odomètre et/ou tachymètre et/ou capteur optoélectronique) de l'ensemble 22, pour fournir une position absolue précise de l'aéronef AC au sol.

Les consignes (ou ordres) de vitesse et de guidage latéral, ainsi obtenues, sont ensuite appliquées automatiquement à un système de pilotage automatique usuel de l'aéronef.

Par ailleurs, dans un quatrième mode de réalisation particulier, l'étape d'assistance E3B comprend une sous-étape E3B4 de pilotage automatique. Cette sous-étape E3B4 de pilotage automatique met en oeuvre un pilotage automatique de l'aéronef pour suivre une route, reçue à l'étape de réception E1.

Pour ce faire, dans une réalisation particulière, le dispositif de pilotage automatique 29 utilise des informations d'assistance reçues du dispositif de traitement de données 12, pour gérer des consignes (ou ordres) de pilotage (guidage latéral et gestion de vitesse) qui sont appliquées automatiquement à l'aéronef.

Dans une réalisation particulière, la sous-étape E3B4 présente les caractéristiques suivantes :
- le système 1 obtient la route à suivre par l'aéronef, à partir de la carte dynamique de l'aéroport et du trajet automatiquement inséré à partir des instructions du contrôle aérien, à l'aide d'une transcription vocale automatique ;
- le système 1 obtient automatiquement une information concernant une autorisation d'entrer (ou non) sur une piste, à l'aide d'une transcription vocale automatique des instructions données vocalement par le contrôle aérien au pilote de l'aéronef et il détecte automatiquement, par l'intermédiaire d'une détection optique, des éléments caractéristiques B1 à B4 relatifs à un point d'attente P1, P2, P3 d'une voie de circulation correspondant à une piste 3, 4 de l'aérodrome 2 pour pouvoir détecter le point d'attente P1, P2, P3 et autoriser ou non l'aéronef AC à entrer sur la piste 3, 4 ;
- le système 1 détermine une position absolue précise de l'aéronef AC au sol, en utilisant une fusion de données de position, issues de différentes sources de données (système de référence inertielle et/ou système de positionnement par satellites et/ou odomètre et/ou tachymètre et/ou capteur optoélectronique) de l'ensemble 22 ;
- à partir des données précédentes, le système 1 détermine et fournit des consignes de vitesse et des consignes latérales au guidage.

Les consignes (ou ordres) de vitesse et de guidage latéral, ainsi obtenues, sont ensuite appliquées automatiquement à un système de pilotage automatique usuel de l'aéronef.

Le système 1 et le procédé P, tels que décrits ci-dessus, présentent de nombreux avantages. En particulier :
- ils sont en mesure d'assister le pilote de l'aéronef pendant la phase de roulement au sol, pour l'aider à faire suivre à l'aéronef le trajet (cap ou route) qu'il doit suivre ; et
- cette assistance peut être mise en oeuvre selon l'un d'une pluralité de modes d'assistance différents, plus ou moins automatisés, c'est-à-dire nécessitant une intervention plus ou moins importante du pilote.

## Revendications

1. Procédé d'assistance d'un pilote d'un aéronef lors d'un roulement au sol de l'aéronef sur une voie de circulation d'un aérodrome,
**caractérisé en ce qu'**il comporte au moins les étapes suivantes :
- une étape de surveillance (E2), mise en oeuvre par une unité de surveillance (8), au moins pour surveiller l'aérodrome de manière (2) à pouvoir détecter au moins un élément caractéristique (C1 à C9, B1 à B4) d'une voie de circulation (3, 4, 5, 6) de l'aérodrome (2), pour déterminer une position relative courante de l'aéronef (AC) par rapport à l'élément caractéristique (C1 à C9, B1 à B4) détecté, et pour en déduire au moins une information dite d'assistance, l'étape de surveillance (E2) comprenant une étape de réception de données (E2A) comportant au moins une étape d'odométrie (E2A2) au moins pour mettre en oeuvre une odométrie visuelle afin de déterminer au moins la position de l'aéronef (AC) permettant d'obtenir ladite position relative courante de l'aéronef (AC) ; et
- une étape d'assistance (E3), mise en oeuvre par au moins une unité d'assistance, au moins pour assister le pilote de l'aéronef (AC) lors du roulement de l'aéronef (AC) sur l'aérodrome (2) afin de faire suivre à l'aéronef (AC) un trajet (TR), en prenant en compte au moins ladite information d'assistance.

2. Procédé selon la revendication 1,
**caractérisé en ce qu'**il comporte, de plus, une étape de réception (E1), mise en oeuvre par une unité de réception (7), au moins pour recevoir au moins une partie du trajet (TR) à suivre par l'aéronef (AC) sur l'aérodrome (2).

3. Procédé selon la revendication 2,
**caractérisé en ce que** l'étape de réception (E1) comprend la réception de l'une des informations suivantes représentant au moins ladite partie de trajet (TR) :
- le cap à suivre par l'aéronef (AC) ;
- la route à suivre par l'aéronef (AC).

4. Procédé selon l'une quelconque des revendications précédentes, **caractérisé en ce que** l'étape de réception de données (E2A) comprend également au moins l'une des étapes suivantes :
- une étape de détection optique (E2A1) comprenant une sous-étape de prise d'images au moins pour prendre des images de l'environnement extérieur de l'aéronef (AC) et une sous-étape de traitement d'images au moins pour traiter au moins certaines des images prises à ladite sous-étape de prise d'images de manière à détecter au moins un élément caractéristique relatif à une voie de circulation, représenté dans l'une desdites images traitées ;
- une étape de détection radar (E2A3) au moins pour détecter une limite entre une zone pourvue d'un revêtement pour la circulation sur la voie de circulation (3, 4, 5, 6) et une zone (Z1, Z2) dépourvue d'un revêtement pour la circulation.

5. Procédé selon l'une quelconque des revendications précédentes, **caractérisé en ce que** l'étape de surveillance (E2) comprend au moins l'une des étapes suivantes :
- une étape de réception de données (E2C) comprenant la réception d'informations de position d'au moins l'une des sources de données suivantes (S1, Si) de l'aéronef (AC) : un système de référence inertielle, un système de positionnement par satellites, un odomètre, un tachymètre, un capteur optoélectronique, ces informations de position permettant de déterminer une position absolue de l'aéronef (AC) ;
- une étape de traitement de données (E2B) au moins pour déterminer une position absolue consolidée de l'aéronef (AC), en utilisant des informations de position issues d'une pluralité de sources de données différentes.

6. Procédé selon l'une quelconque des revendications précédentes, **caractérisé en ce que** l'étape de surveillance (E2) comprend au moins :
- une étape de réception de données (E2A) comprenant la réception de données relatives à au moins l'un des éléments caractéristiques (C1 à C9) suivants de la voie de circulation (3, 4, 5, 6) :
• une ligne centrale (C1, C2, C9) de la voie de circulation (3, 5, 6) ;
• au moins une ligne de bord (C3, C4) de la voie de circulation (5) ;
• au moins une limite (C5, C6, C7, C8) entre une zone pourvue d'un revêtement pour la circulation de la voie de circulation (5, 6) et une zone (Z1, Z2) dépourvue d'un revêtement pour la circulation ; et
- une étape de traitement de données (E2B) au moins pour traiter les données reçues à l'étape de réception de données de manière à déterminer la position relative courante de l'aéronef (AC) par rapport à l'élément caractéristique (C1 à C9) et à déduire, le cas échéant, un écartement courant de l'aéronef (AC) par rapport au trajet à suivre, ledit écartement courant représentant l'information d'assistance.

7. Procédé selon l'une quelconque des revendications précédentes, **caractérisé en ce que** l'étape de surveillance (E2) comprend au moins :
- une étape de réception (E2A) de données comprenant la réception de données relatives à un ou plusieurs éléments caractéristiques (B1, B2, B3, B4) comprenant un élément caractéristique (B1) obligatoire correspondant à un marquage d'arrêt au sol, ledit ou lesdits éléments caractéristiques (B1, B2, B3, B4) étant relatifs à un point d'attente (P1, P2, P3) de l'aérodrome (2) ; et
- une étape de traitement de données (E2B) au moins pour déterminer, à partir des données reçues à l'étape de réception de données (E2A) et d'une éventuelle autorisation du contrôle aérien, une autorisation ou une interdiction d'entrer sur la piste (3, 4), ladite autorisation ou ladite interdiction représentant l'information d'assistance.

8. Procédé selon l'une quelconque des revendications précédentes, **caractérisé en ce que** l'étape de surveillance (E2) utilise une carte dynamique de l'aérodrome (2).

9. Procédé selon l'une quelconque des revendications précédentes, **caractérisé en ce que** l'étape d'assistance (E3) comprend au moins une étape (E3A) au moins pour présenter des informations d'aide au pilotage et/ou d'aide à la navigation au sol dans le poste de pilotage de l'aéronef (AC).

10. Procédé selon l'une quelconque des revendications 1 à 9,
**caractérisé en ce que** l'étape d'assistance (E3) comprend une sous-étape (E3B1) de maintien de cap au moins pour réaliser un maintien automatique par l'aéronef (AC) d'un cap à suivre, reçu à l'étape de réception (E1).

11. Procédé selon l'une quelconque des revendications 1 à 9,
**caractérisé en ce que** l'étape d'assistance (E3) comprend une sous-étape (E3B2) de suivi de ligne droite au moins pour réaliser un suivi automatique par l'aéronef (AC) d'une ligne droite, reçue à l'étape de réception (E1).

12. Procédé selon l'une quelconque des revendications 1 à 9,
**caractérisé en ce que** l'étape d'assistance (E3) comprend une sous-étape (E3B3) de suivi de ligne droite et de gestion de vitesse pour réaliser, à la fois, un suivi automatique par l'aéronef (AC) d'une ligne droite, reçue à l'étape de réception (E1), et une gestion automatique de la vitesse de l'aéronef (AC).

13. Procédé selon l'une quelconque des revendications 1 à 9,
**caractérisé en ce que** l'étape d'assistance (E3) comprend une sous-étape (E3B4) de pilotage automatique au moins pour mettre en oeuvre un pilotage automatique de l'aéronef (AC) pour suivre une route, reçue à l'étape de réception (E1).

14. Système d'assistance d'un pilote d'un aéronef lors d'un roulement au sol de l'aéronef sur une voie de circulation d'un aérodrome,
**caractérisé en ce qu'**il comporte au moins :
- une unité de surveillance (8) configurée pour surveiller l'aérodrome (2) de manière à pouvoir détecter au moins un élément caractéristique (C1 à C9, B1 à B4) d'une voie de circulation (3, 4, 5, 6) de l'aérodrome (2), pour déterminer une position relative courante de l'aéronef (AC) par rapport à l'élément caractéristique (C1 à C9, B1 à B4) détecté, et pour en déduire au moins une information dite d'assistance, l'unité de surveillance (8) comportant au moins odomètre (18) au moins pour mettre en oeuvre une odométrie visuelle afin de déterminer au moins la position de l'aéronef (AC) permettant d'obtenir ladite position relative courante de l'aéronef (AC) ; et
- une unité d'assistance (9) configurée pour assister le pilote de l'aéronef (AC) lors du roulement sur l'aérodrome (2) afin de faire suivre à l'aéronef (AC) un trajet (TR) en prenant en compte au moins ladite information d'assistance.

15. Aéronef,
**caractérisé en ce qu'**il comporte au moins un système (1) selon la revendication 14.
